Europäisches Patentamt

European Patent Office

Office européen des brevets

(11) Publication number: 0 414 922 A1

# EUROPEAN PATENT APPLICATION
## published in accordance with Art. 158(3) EPC

(21) Application number: 90904675.7

(22) Date of filing: 16.03.90

(86) International application number:
PCT/JP90/00353

(87) International publication number:
WO 90/11193 (04.10.90 90/23)

(51) Int. Cl.⁵: B42D 15/02

(30) Priority: 17.03.89 JP 67331/89

(43) Date of publication of application:
06.03.91 Bulletin 91/10

(84) Designated Contracting States:
BE FR IT

(71) Applicant: DAIMATSU KAGAKU KOGYO CO.
LTD.
2-1, Obase-cho Tennoji-ku
Osaka-shi Osaka 543(JP)

(72) Inventor: MATSUGUCHI, Noboru
4-12-3, Yamate-cho Suita-shi
Osaka 564(JP)
Inventor: MATSUGUCHI, Tadashi
20-5, Maruyama-cho Suita-shi
Osaka 564(JP)

(74) Representative: Kügele, Bernhard et al
c/o NOVAPAT-CABINET CHEREAU 9, Rue du
Valais
CH-1202 Genève(CH)

(54) BONDING MATERIAL AND METHOD OF ITS PRODUCTION.

(57) A bonding material includes a sheet base material having a shielding property, a first heat-bondable resin layer formed on one of the main planes of the sheet base material and having low bonding power and a second heat-bondable resin layer formed at part of the surface of the first heat-bondable resin layer and having high bonding power. The bonding material includes also the sheet base material, a shielding layer formed on one of the main planes of the sheet base material and having a shielding property, a first heat-bondable resin layer formed on the surface of the shielding layer and having low bonding power and a second heat-bondable resin layer formed at part of the surface of the first heat-bondable resin layer and having high bonding power. Accordingly, the first heat-bondable resin layer is bonded weakly to a member to be bonded and the second heat-bondable resin layer, strongly, when the surfaces of the first and second heat-bondable resin layers are put onto the surface of the member to be bonded and heat is applied to them. Accordingly, the sheet base material will not by any chance peel off from the member to be bonded due to the force acting on the portion where the second heat-bondable resin layer is formed. When the sheet base material or the like is cut and peeled at the portion where the second heat-bondable resin layer is not formed, the first heat-bondable resin layer is peeled from the member to be bonded along with the sheet base material in the case of a bonding material including the sheet base material having the shielding property, and the shielding layer and the first heat-bondable resin layer are peeled off along with the sheet base material from the member to be bonded in the case of bonding material including the shielding layer having the shielding property. Therefore, the surface of the member to be bonded becomes visible.

# F I G. 3B

## STICKING MATERIAL AND MANUFACTURING METHOD THEREOF

Technical field

The present invention relates to a sticking material and a manufacturing method thereof, more specifically, the present invention relates to a sticking material for covering temporarily a portion provided with a confidential matter by adhering it on the portion, and a manufacturing method thereof.

Background Art

As a conventional sticking material which constitutes a background of this invention, there is a sticking material which a pressure sensitive adhesive layer is formed on the reverse side of a sheet of base material.

In this conventional sticking material, a surface of a material to be sticked can be covered by adhering it on the surface of the material to be sticked, however, it is not preferably used for covering temporarily the confidential matter, since the sticking material is hardly peeled off from the surface of the material to be sticked.

In oder to facilitate peeling the sticking material from the surface of the material to be sticked, it is thinking that a peeling process such as silicon processing is applied on the surface of the material to be sticked so as to be peeled off the sticking material. However, it is hardly to apply the peeling process on the material to be sticked which is separated from the sticking material, and the cost for manufacturing increases. And, further, if peeling process is applied on the surface of the material to be sticked, the sticking material is separated from the material to be sticked inadvertently.

Disclosure of Invention

Therefore, it is a principal object of the present invention to provide a sticking material, which is able to cover preferably and temporarily the surface of the material to be sticked without any process on the surface of the material to be sticked, and a manufacturing method thereof.

The first invention is a sticking material comprising a base material having a suppressiveness, the first heat adherent resin layer having a weak adhesion formed on a principal suface of the base material, and the second heat adherent resin layer having a strong adhesion formed on a part of surface of said first heat adherent resin layer.

The second invention is a manufacturing method of said sticking material comprising a step for preparing a base material having a suppressiveness, a process for forming a first heat adherent resin layer having a weak adhesion on a principal surface of said base material resin layer, and a step for forming a second heat adherent resin layer having a strong adhesion on a part of surface of said first heat adherent resin layer.

The third invention is a comprising a base material, a suppression layer having a suppressiveness on a principal surface of said base material, the first heat adherent resin layer having a weak adhesion formed on a principal surface of the suppression layer, and the second heat adherent resin layer having a strong adhesion formed on a part of surface of said first heat adherent resin layer.

The forth invention is a separate manufacturing method of said sticking material method of a sticking material comprising a step for preparing a base material, a step for forming a suppression layer having a suppressivenes on a principal surface of said base material, a process for forming a first heat adherent resin layer having a weak adhesion on a principal surface of said suppression layer, and a step for forming a second heat adherent resin layer having a strong adhesion on a part of surface of said first heat adherent resin layer.

The above and other objects, features, aspect and advantages of the present invention will become more apparent from the following detailed description of the embodiments made in connection with the accompanying drawings.

Brief Description of Drawings

Fig. 1 is a surface view showing one embodiment of the present invention, and Fig. 2 is a reverse side view thereof.

Fig. 3A is a perspective view showing a postcard piece of the embodiment shown in Fig. 1 and Fig. 2, and Fig. 3B is a sectional view thereof.

Fig. 4 is a diagrammatical view of a manufacturing machine showing one example of manufacturing process of a covering material.

Fig. 5A is a surface view of a continuous raw paper.

Fig. 5B is a perspective view of the covering material.

Fig. 6 is a perspective view generally showing an adhesion machine for the covering material.

Fig. 7A and Fig. 7B are diagrammatical views of an adhesive portion transfer unit.

Fig. 8 is a perspective view showing an essential portion of a covering material transfer unit.

Fig. 9A is a perspective view showing around a covering material cutter on the downstream side of the unit shown in Fig. 8, and Fig. 9B is a diagrammatical view showing an essential portion on the backside of the covering material cutter.

Fig. 10A is a perspective view showing an essential portion of a pressing and heating unit for the covering material, and Fig. 10B is a diagrammatical view showing an essential portion of its backside.

Fig. 11 is a view showing a time chart of the adhesion machine shown in Fig. 6.

Fig. 12A and Fig. 12B are views showing a state which the covering material is peeled off from the postcard material, in which Fig. 12A is a perspective view thereof, and Fig. 12B is a sectional view thereof.

Fig. 13 is a surface view showing an essential portion of an another embodiment of the present invention.

Fig. 14 is a surface view showing an essential portion of a separate variation of the embodiment shown in Fig. 13.


Best Mode for carrying out the Invention

The present invention relates to a sticking material which is adhered on the surface of the material to be sticked such as a postcard material, and a manufacturing method thereof, then, according to this embodiment, a postcard including a postcard material and a sticking material adhered on a surface of the postcard material, and a manufacturing method thereof will be explained.

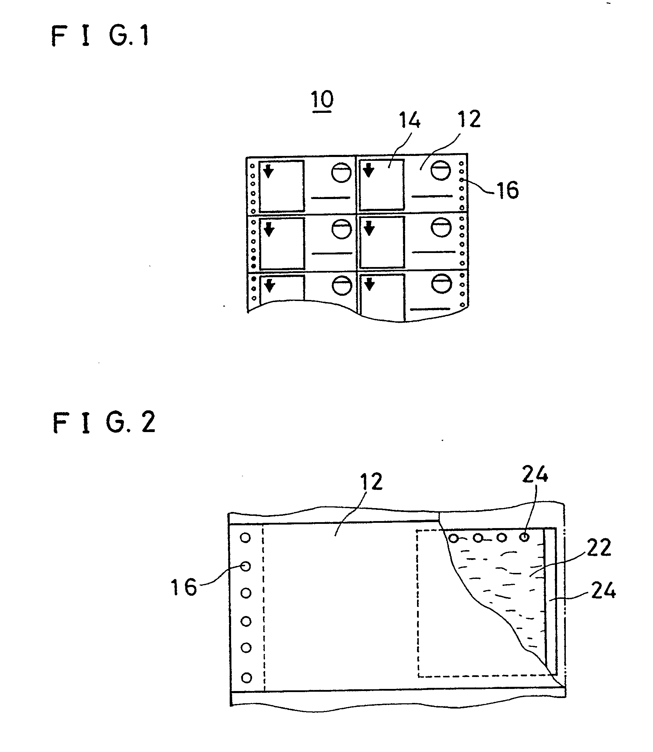

Fig. 1 is a surface view showing one embodiment of the present invention, and Fig. 2 is a reverse side view thereof.

The continuous postcard 10 includes a postcard material 12 of standard postcard size and a covering material l4 as a sticking material adhered on a part of the postcard material 12.

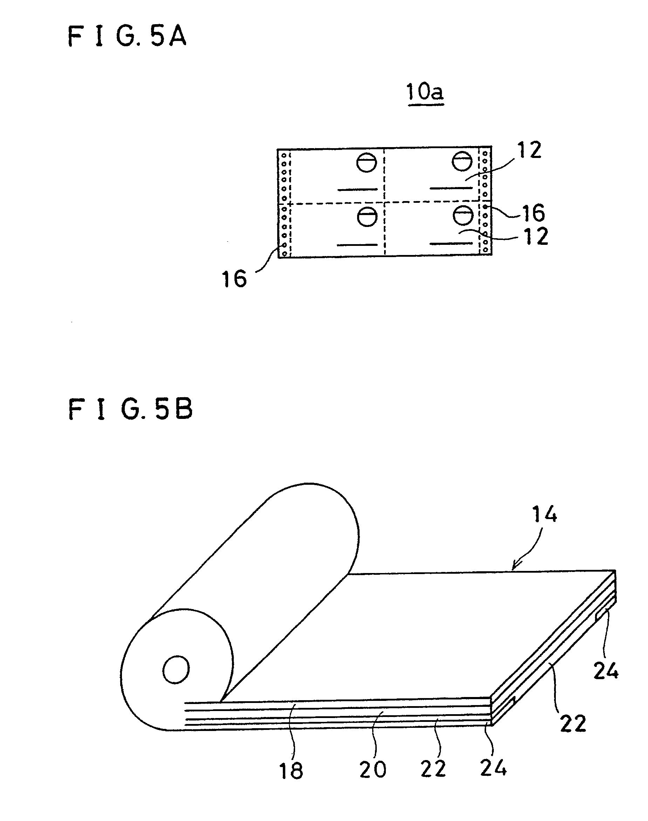

The continuous postcard 10, as shown in Fig. 5A, includes a continuous raw paper 10a which is formed separably into each postcard material 12 of standard postcard size. That is, on boundary lines of each postcard material 12, perforations are formed suitably to form each postcard material 12, and at opposite ends of the continuous raw paper 10a, sprocket holes 16 are formed continuously at a suitable distance.

In the present invention, as the continuous raw paper 10a, thin materials such as synthetic paper and other synthetic resin sheets and the like are used besides the typical paper.

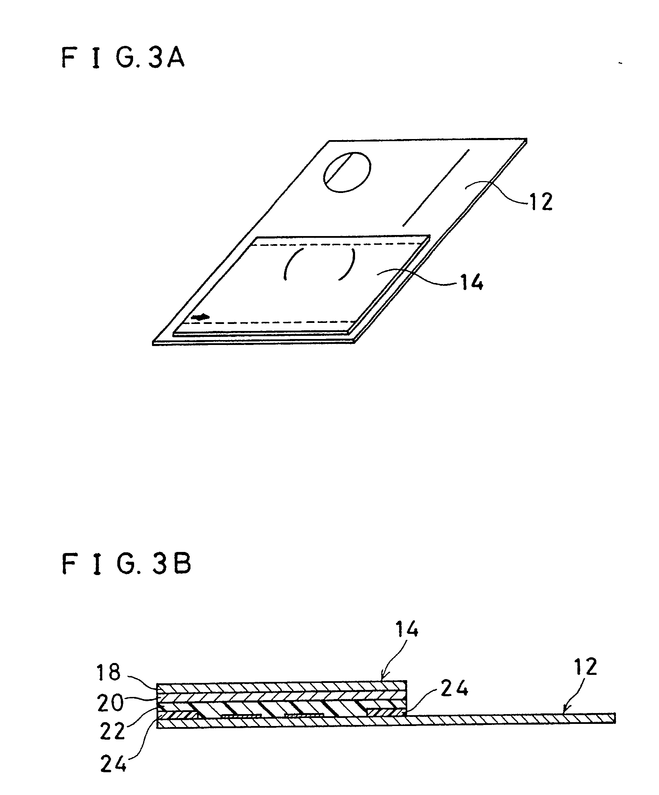

Next, the covering material 14 will be explained in refer to Fig. 2, Fig. 3A and Fig. 3B principally. The covering material 14 is applied on a surface of the postcard material 12, for example, a part which a confidential matter such as a information of the finance or the insurance are formed. a confidential matter 13b such as a information of the finance or the insurance are formed.

The covering material 14 includes a sheet of base material 18, the base material 18 is formed with a relatively soft material such as paper, synthetic resin film and the like which can be cut by a scissors or the like.

And on one main surface of the base material 18 a suppression layer 20 is formed.

The suppression layer 20 is formed by printing a silver ink and the like or laminating a film material such as an aluminum foil having a suppressiveness with adhesives.

· On the surface of the suppression layer 20, the first heat adherent resin layer 22 is formed by coating a heat adherent resin with a weak adhesive strength as heating and extruding it, or by gravure or silk screen printing as dissolving it in a solvent or despersing in water and the first heat adherent resin layer 22 has a weak adhesive strength.

The first heat adherent resin layer 22 is formed to melt at about $100°C$ to $200°C$ so as to be adhered to the postcard material 12 made of paper or the like with a weak adhesive strength.

As an example of said heat adherent resin having a weak adhesive strength, adhesives of EVA group may be selected. The composition of the adhesive comprises an EVA (ethylene-vinyl acetate copolymerized resin), a tackifier, a wax and an anti-oxidant, to which sometimes a release agent such as silicon for reducing the adhesion, a plasticizer and a filler are added as an adjutant.

As the tackifier, there are glycerin of partially hydrogenated rosin, glycerin-ester of rosin, pentaerythritol modified rosin, petroleum resin, $\alpha$ - methylstyrene/vinyl toluene copolymer, terpene oil polymer and terpene-phenol polymer, etc.

As the wax, there are paraffin wax, microcrystalline wax, low molecular weight polyethylene wax, Fischer-Tropsch wax, caster wax and chlorinated paraffin, etc.

As the anti-oxidant, there are hindered phenol group compound, salicylic acid group compound, benzophenone group compound, benzotriazol group compound, phosphorus group compound, sulfur group compound, organic metal group compound, etc.

As the heat adherent resins having a weak adhesive strength other than the aforesaid examples, there are stylene-butadiene-stylene copolymer, stylene-isoprele-stylene copolymer, polyethylene, ethylene-ethylacrylate copolymerized resin, ethylene-acrylic acid copolymerized resin, ethylene-methyl acrylate copolymerized resin, ethylene-methyl methacrylate, ethylene-methacrylic acid copolymerized resin, ionomer resin, polymethylpentene resin, ethylene-vinylalcohol copolymerized resin, vinylidene chloride resin, vinyl chloride-vinyl acetate copolymerized resin, polyamide resin, stylene-acrylic acid copolymerized resin, polystylene resin, polyacrylic acid copolymerized resin, polyester resin, polyurethane resin, waxes, etc. When printing and coating, these resins can be suitably used as heating or dissolving in a solvent or dispersing in water.

Further, on the surface of the first heat adherent resin layer 24, a second heat adherent resin layer 24 having a strong adhesive strength is formed. In this embodiment , the second heat adherent resin layer 24 is formed at both sides in the lengthwise direction of the postcard material 12, that is, in the fixed width at the upside and downside of the covering material 14. Moreover, the second heat adherent resin layer is formed at both sides in the breadthwise direction of the postcard material 12, that is, at right and left ends of the covering material 14 in spots. The second heat adherent resin layer is formed by coating a heat adherent resin having a strong adhesive strength, for example adhesives of EVA group, stylene-butadiene-stylene copolymer, stylene-isoprele-stylene copolymer in parts.

In this case, for example, the tackifier is mixed more as compared with the heat adherent resin having a weak adhesive strength or the release agent is mixed less as compared with the heat adherent resin having a weak adhesive strength, in the heat adherent resin having a strong adhesive strength. The second heat adherent resin layer 24 may be formed at only both sides of upside and downside or both right side and left side of the covering material 14. The second heat adherent resin layer 24 may be formed in the fixed width or may be formed in spots.

Next, a method of manufacturing the covering material l4 will be explained.

First, paper forming the base material 18 is prepared, and the suppression layer 20 is formed on one main surface thereof by allover printing with a silver ink, for example, by the known printing method as the offset printing or coating.

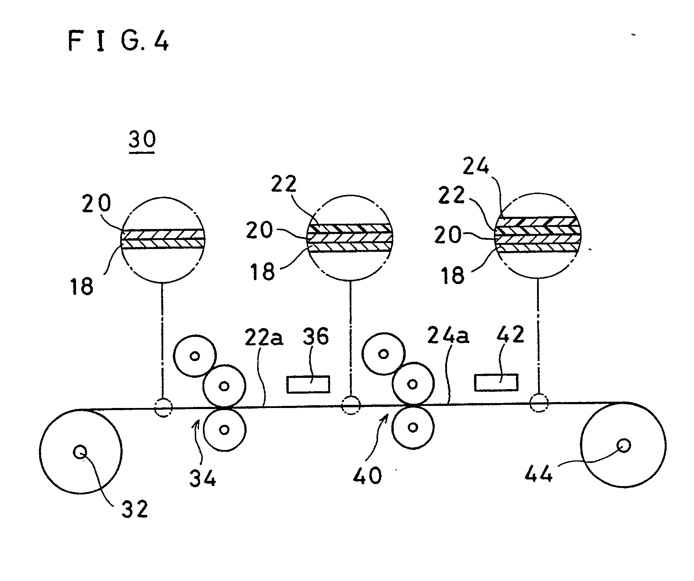

As showing Fig. 4, a rolled laminate comprising the base material 18 formed with the suppression layer 20 is mounted on a hold roller 32 of a manufacturing machine 30 for the covering material.

The base material 18 held by the hold roller 32 is loosen at one end and led to a heat adherent resin coater 34 for printing or coating the heat adherent resin 22a containing, for example, the aforesaid ethylene-vinyl acetate copolymerized resin as a main component. The heat adherent resin coater 34 is a printing or coating machine utilizing known printing or coating methods such as a typographic printing, gravure printing, silk screen printing, offset printing or the like.

By the heat adherent resin coater 34, the heat adherent resin 22a having a weak adhesive strength is printing or coating on the surface of the suppression layer 20.

The base material 18 onto which the heat adherent resin 22a is printed or coated is led to a dryer 36, whereby the heat adherent resin 22a is dried and the first heat adherent resin layer 22 is formed.

Next, the base material 18 on which the first heat adherent resin layer 22 is formed is led to a heat adherent resin coater 40 for printing or coating the heat adherent resin 24a having a strong adhesive strength. The heat adherent resin coater 40 is a printing or coating machine utilizing known printing or coating methods such as typographic printing, gravure printing, silk screen printing, offset printing or the like. By the heat adherent resin coater 40, the heat adherent resin 24a is printing or coating on the surface of the first heat adherent resin layer 22.

The base material 18 onto which the heat adherent resin 24a is printed or coated is led to a dryer 42, whereby the heat adherent resin 24a is dried and the second heat adherent resin layer 24 is formed.

Thus, as shown in Fig. 5B, a continuous sheet 14a of the covering material is formed with the base material 18, the suppression layer 20, the first heat adherent resin layer 22 and the second heat adherent resin layer 24.

The continuous sheet 14a of the covering material is wound round a take-up roller 44 again.

In this embodiment, as shown in Fig. 2 and Fig. 5B, the suppression layer 20 is formed on one main surface of the base material 18, and the first heat adherent resin layer 22 is formed on the surface of the suppression layer 20.

The second heat adherent resin layer 24 is formed on a surface of the first heat adherent resin layer 22, at the upside and downside of the covering material 14 in the fixed width. Further, the second heat adherent resin layer 24 is formed on a surface of the first heat adherent resin layer 22 at both right side and left side in spots. Therefore, the covering material 14 is adhered strongly to the postcard material 12 at a pcrtion which the second adherent resin layer 24 is formed and is adhered weakly to the postcard material 12 at a portion which the second adherent resin layer 24 is not formed.

Meanwhile, as the example of base material 18, besides the aforesaid example, there are films of synthetic paper, cellophane, polyethylene, polyester, etc. or an aluminum foil and the like. However, relatively soft materials are preferably selected as the base material 18 such that when the covering material I4 is adhered to the postcard material 12, it will not come off easily therefrom against the adhesions of the first heat adherent resin layer 22 and the second heat adherent resin layer 24.

When the aluminum foil and the like having a good suppressiveness is selected as the base material 18, the suppression layer 20 is not necessary. In this case, the first heat adherent resin layer 22 is formed on one principal surface of the base material 18.

Also, on the base material 18, any suitable printing which fits to properties of the postcard may be performed, or when the continuous material is used as aforesaid embodiments, for example, a detecting mark(arrow) for detecting feeding pitches of the base material 18 may be printed with a black color or the like.

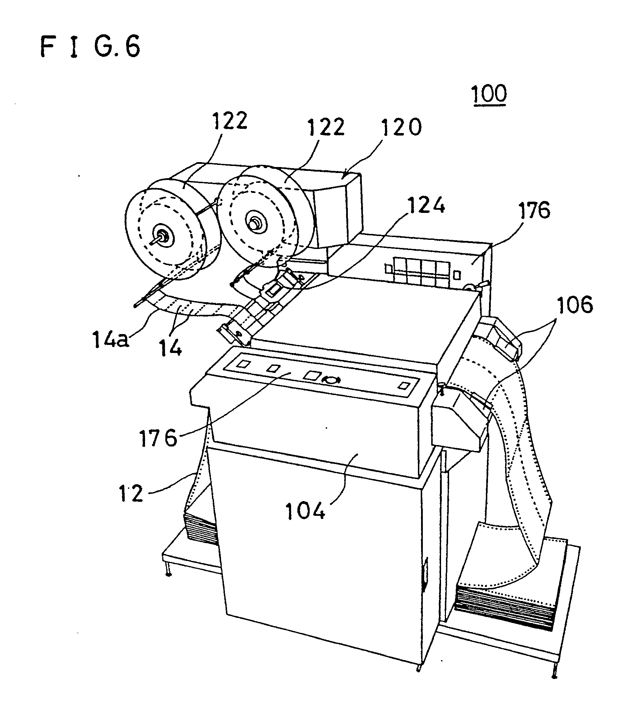

Next, a method for adhering the covering material 14 on the surface of the continuous raw paper 10a will be explained on the basis of an adhesion machine shown in Fig. 6 through Fig. 11.

The adhesion machine 100 for the covering material comprises a continuous paper transfer unit 102 which is designed to feed the continuous raw paper 10a shown in Fig. 5A to the position where the covering material 14 is adhered.

The continuous paper transfer unit 102 includes transfer sprockets 106 formed substantially on opposite ends of a adhesion machine body 104, and an adhesive portion transfer device 108 which is formed substantially in the center of the adhesion machine body 104 to transfer the continuous raw paper 10a in the transferring direction by a suitable distance which, in the present embodiment, corresponds to the length of a sheet of covering material 14 adhered to the postcard material 12. The transfer sprockets 106 which are designed to rotate belts formed with projections which engage to the sprocket holes 16 of the continuous raw paper 10a, successively engage the projections to the sprocket holes 16 to transfer the continuous raw paper 10a.

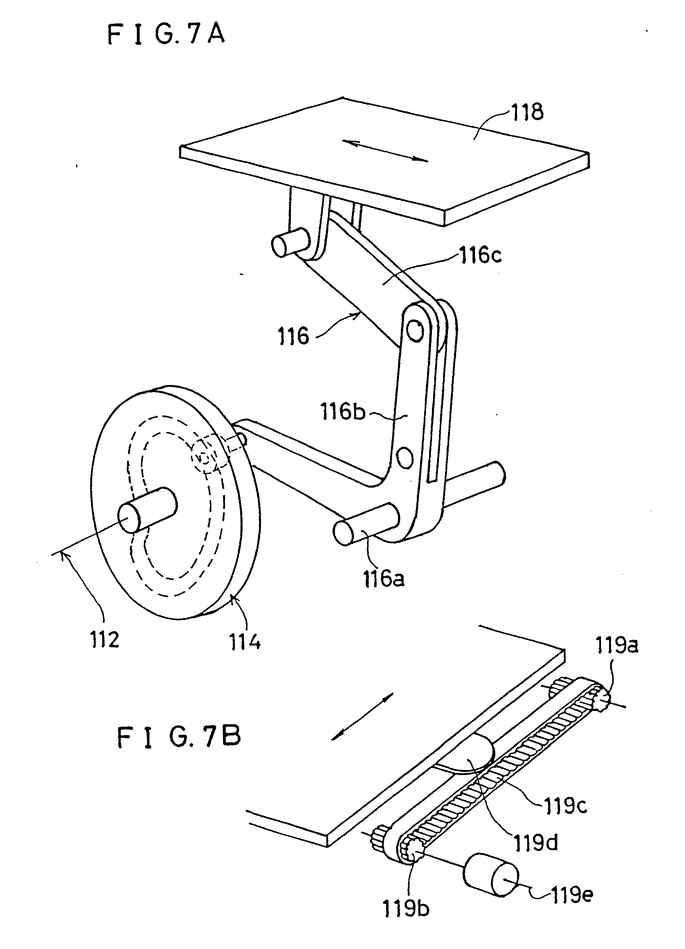

The adhesive portion transfer device 108, as shown in Fig. 7A, includes a continuous paper transfer cum 114 secured to a shaft 112 disposed across the front and rear of the adhesion machine body 104. A suitable groove is formed in the body of the continuous paper transfer cum 114 which gives suitable vertical and front-to-back movements to a link mechanism 116 by its uniform rotation. By the action of the link mechanism 116, an adhesive portion transfer table 118 fixed to the link mechanism 116 is moved back and forth continuously or intermittently. That is, the link mechanism 116 includes a link 116b which is fixed rockably to the adhesion machine body 104 with a pivot shaft 116a and a link 116c fixed rotatably to the adhesive portion transfer table 118, and the link 116b is pivotally fixed to the link 116c. The adhesive portion trasnfer table 118 is move back and forth through the link mechanism 116 by rotation of the continuous paper transfer cum 114.

The amount of continuous raw paper 10a transferred in the continuous paper transfer unit 102, as shown in Fig. 7B, is detected by a synchronizing device 119. That is, a portion of the adhesive portion transfer table 118 is connected to a timing belt 119c mounted between timing pullies 119a and 119b provided at the front and rear of the adhesion machine body 104 by a connecting piece 119d, thereby the transferrig distance of the adhesive portion transfer table 118 is detected by a pulse signal from an encoder 119e coupled to the timing pully 119b to control the rotation of a pulse motor which is a drive source formed on the continuous paper transfer unit 102 for the overall control.

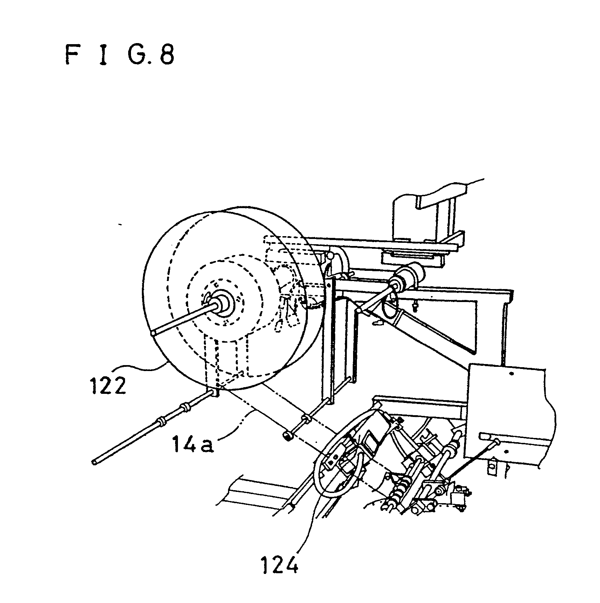

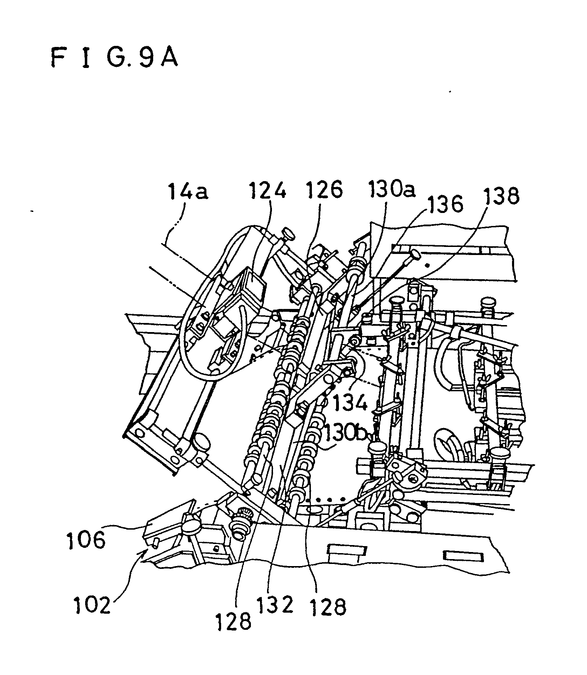

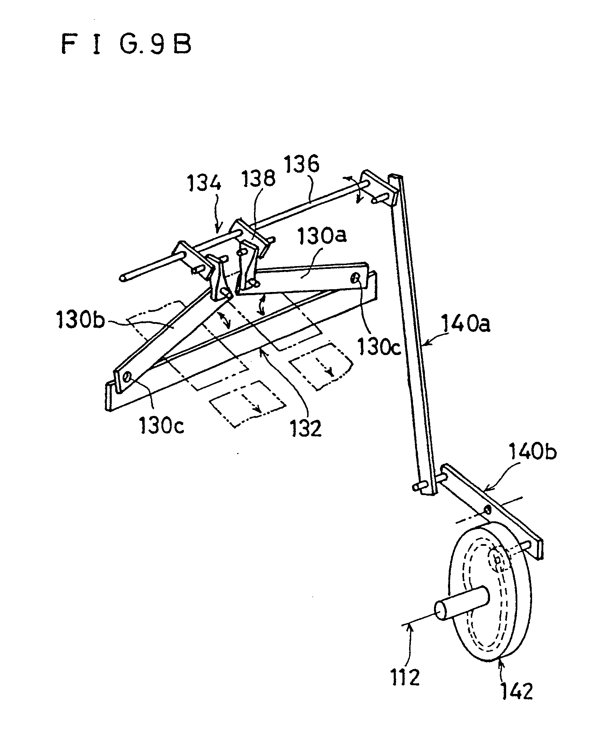

Next, a transfer unit of the covering material 14 which is adhered to the surface of the continuous raw paper 10a fed successively by the continuous paper transfer unit 102 will be explained with reference to Fig. 8, Fig. 9A and Fig. 9B.

The covering material transfer unit 120 includes a real 122 whereon the rolled continuous sheet 14a of tile covering material continuously formed by the covering material 14 is mounted, a covering material detector 124 which detects the transferring amount of the continuous sheet 14a pulled out from the reel 122 and the arrival of the continuous sheet 14a at a specified position to output the electrical signal to a controller of the covering material transfer unit 120, and a covering material cutter 126 which is disposed on the downstream side from the covering material detector 124 to cut the continuous sheet 14a into a suitable length.

In the covering material transfer unit 120, at the front and rear of the covering material cutter 126 which cuts the continuous sheet 14a, a pair of covering material carries 128 comprising rubber rings fixed to a shaft and rotatable as contacting each other are disposed.

The continuous sheet 14a of the covering materials clamped between the rings of the pair of covering material carriers 128 is carried to the suitable position on the sufrface of the continuous raw paper 10a by the rotation of the covering material carriers 128.

The covering material cutter 126 includes cutter blades 130a and 130b. The cutter blades 130a and 130b are fixed to a cutter body 132 pivotally about pivot axes 130c at one end and to a link mechanism 134 at the other end (refer to Fig. 9A and Fig. 9B).

The link mechanism 134 is fixed pivotally to a cutter shaft 136 fixed pivotally to the cutter body 132 through a fixed piece 138, and the cutter shaft 136 is connected to a disc 142 formed with a cum groove through links 140a and 140b as shown in Fig. 9B. The disc 142 is fixed to the shaft 112 which secures the continuous paper transfer cum 114.

Accordingly, as the disc 142 rotates the cutter shaft 136 is rotated by the action of cum groove formed in the disc 142 through the links 140a and 140b, thereby the cutter blades 130a and 130b are pivoted about the pivot axes 130c fixed to the cutter body 132 to cut the continuous sheet 14a of the covering material into the suitable size.

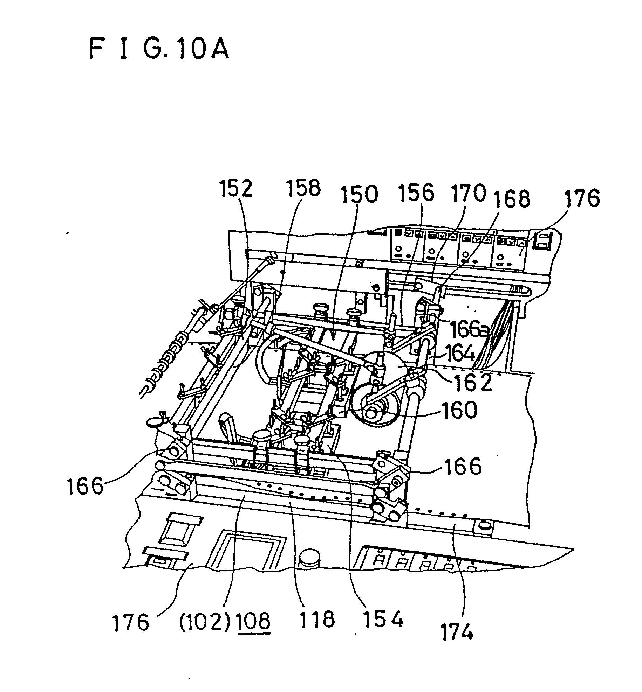

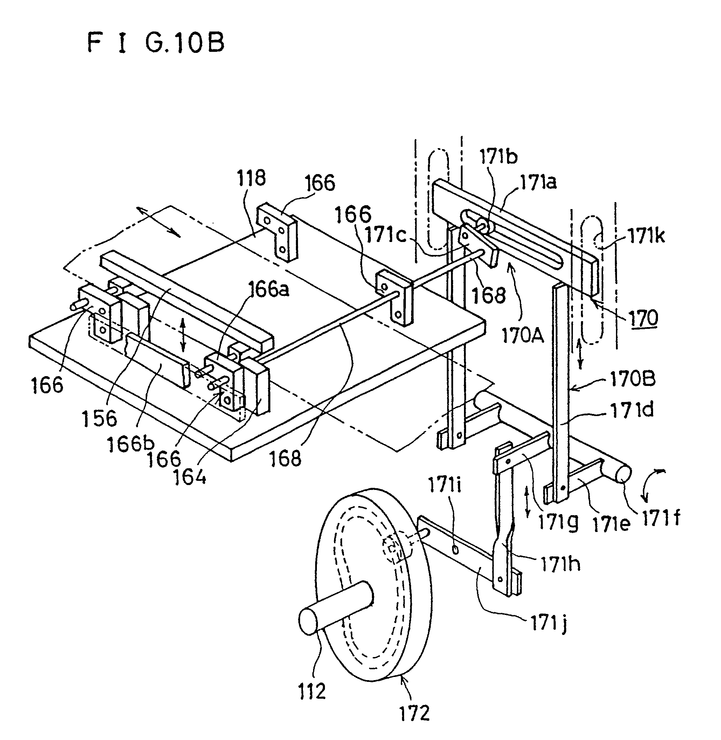

Next, a pressing and heating unit 150 which adheres the covering material 14 to the continuous raw paper 10a will be explained with reference to Fig. 10A and Fig. 10B.

In the embodiment, the pressing and heating unit 150 includes a linear pressing and heating device 152 which presses the front end of the continuous sheet 14a of the covering materials linearly in the breadthwise direction of the continuous raw paper 10a to adhere it primarily thereto, and a flat pressing and heating device 154 which adheres the covering material 14 adhered to the continuous raw paper 10a at its front end by the linear pressing and heating device 152 to the continous raw paper 10a.

The pressing and heating unit 150 includes a square-frame transfer pedestal 156. To the transfer pedestal 156, a linear heater 158 forming the linear pressing and heating device 152 and a plate heater 160 forming the flat pressing and heating device 154 are secured. The plate heater 160 has subsequentially the same arer as the covering material 14.

Furthermore, in the present embodiment, a press roller 162 is fixed pivotally to the transfer pedestal 156. The press roller 162 is designed to press the covering material 14 adhered to the continuous raw paper 10a by the plate heater 160 to ensure close adhesion. The transfer pedestal 156 onto which the linear heater 158 and flat heater 160 are mounted is fixed movably above the adhesive portion transfer table 118, thereby the continuous raw paper 10a is transferred between the linear heater 158, plate heater 160 and press roller 162 and the adhesive portion transfer table 118. The transfer pedestal 156 is designed to advance back and forth together with the adhesive portion transfer table 118 along the transferring direction of the continuous raw paper 10a.

The transfer pedestal 156 is fixed to a support 164 secured upwardly at the side of adhesive portion transfer table 118 through a link mechanism 166 movably vertically such that the linear heater 158 and plate heater 160 can be attached to the adhesive portion transfer table 118 and detached from it.

That is, an approximately L-shaped link 166a of the link machanism 166 is fixed pivotally to the transfer pedestal 156 at one end, and to the support 164 pivotally at its center by a shaft 168. A pair of same link mechanisms 166 on the upstream and downstream sides are connected by a turnbuckle 166b at the other end of the link 166a so as to operate similarly. The shaft 168 is fixed pivotally to the support 164, thereby the transfer pedestal 156 is moved vertically together with the linear heater 158 and plate heater 160.

The shaft 168 is connected to a disc 172 formed with a cum groove through another link mechanism 170 disposed at one end. The disc 172 is fixed to the shaft 112 to which the continuous paper transfer cum 114 and disc 142 are secured.

The link mechanism 170 includes a rocking and straight moving link mechanism 170A constituted by a guide 171a provided with a slot in the center, a rotor 171b which moves in the slot while rotating and a link 171c connecting the shaft 168 and the rotor 171b. Additionally, the link mechanism 170 includes a vertically moving link mechanism 170B which moves the guide 171a vertically and constituted by a link 171d connected to the guide 171a, a link 171e fixed pivotally to the link 171d, another link 171g connected to the other end of the link 171e through a pivot shaft 171f, link 171h connected pivotally to the link 171g and a link 171j connected to the link 171h at its one end and fixed to the adhesion machine body 104 by a pivot axis 171i.

By the action of cum groove formed in the disc 172, the vertically moving link mechanism 170B is actuated, and by the action of the link mechanism 170B, the guide 171a moves up and down in a slot 171k formed vertically in the adhesion machine body 104, thereby the link 171c of the rocking and straight moving link mechanism 170A is rocked, rotating the shaft 168 at a suitable angle to move the transfer pedestal 156 vertically by the action of another link mechanism 166 previously described.

In the embodiment, though the linear heater 158 and plate heater 160 are secured integrally to the transfer pedestal 156, they are each controlled by temperature controllers (not shown) separately to keep suitable temperatures.

Reason for controlling the heater temperature separately is to enabling a delicate adjustment depending upon characteristics or the like of the first and second heat adherent resin layers 22 and 24 formed on the covering material 14.

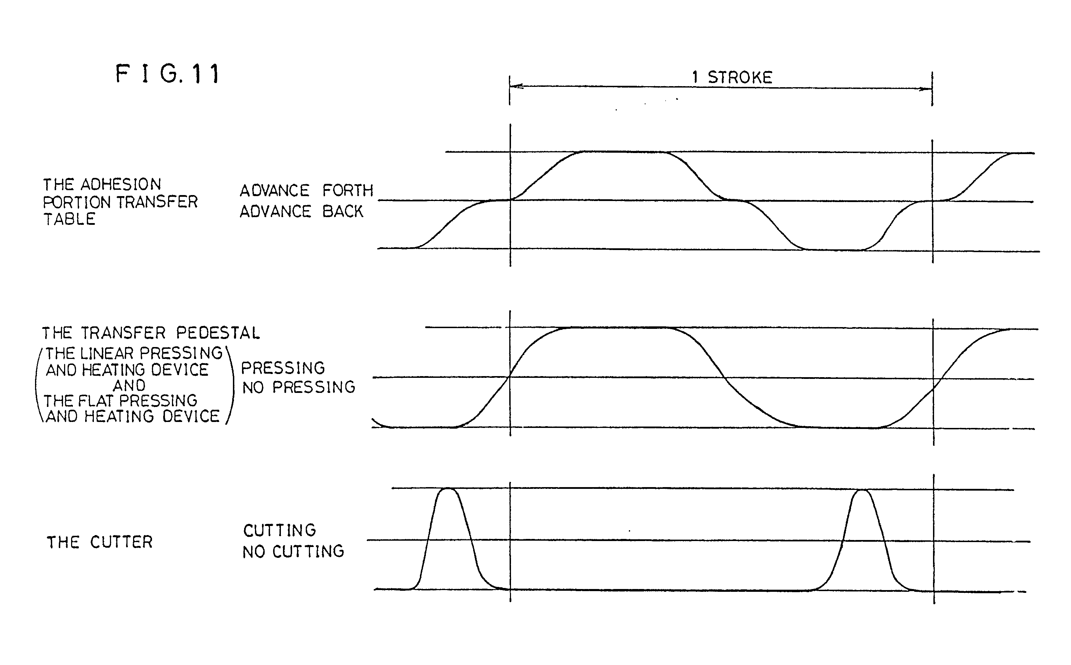

Now, operating conditions of the adhesion machine of the covering material will be explained with reference to time charts shwon in Fig. 11.

A prescribed amount of continuous raw paper 10a is transferred by the transfer sprockets 106 of the continuous paper tranfer unit 102.

The adhesive portion transfer table 118, in the present embodiment, is moved from the downstream side to the upstream side of the continuous raw paper 10a.

While, as the continuous sheet 14a of the covering material is transferred from the reel 122 by the covering material transfer unit 120, the covering material detector 124 detects a detecting mark, an arrow in this embodiment, formed on the continuous sheet 14a of the covering material, and by the detecting signal of the covering material detector 124, the continuous sheet 14a is stopped temporarilly as well as the adhesive portion transfer table 118. At this time, the covering material cutter 126 is actuated and the cutter blades 130a and 130b cut the continuous sheet 14a of the covering material into a suitable size, that is, a sheet of covering material 14 by the action of cum groove in the disc 142.

The front end of the covering material 14 cut into the suitable size by the covering material cutter 126 is positioned at the optimum location on the continuous raw paper 10a, pressed and heated linearly in the breadthwise direction of the continuous raw paper 10a by the lineal pressing and heating device 152 forming the pressing and heating unit 150 to adhere primarily to the continuous raw paper 10a.

Then, simultaneously with pressing and heating, the continuous raw paper 10a is transferred by a fixed distance, corresponding approximately to the length of the covering material 14 in this embodiment, to the downstream side by the action of continuous paper transfer unit 102. That is simultaneously, with pressing and heating of the covering material 14 and postcard material 12 which were positioned under the flat pressing and heating device 154 in the previous cycle, the covering material 14 is transferred by the prescribed distance as the continuous raw paper 10a moves to the downstream side.

After the adhesive portion transfer table 118 has moved by a prescribed amount on rails 174, the lineal pressing and heating device 152 and flat pressing and heating device 154 are again detached from the adhesive portion transfer table 118 by the action of cum groove in the disc 172 and positioned thereabove. At the same time, the lineal pressing and heating device 152 and flat pressing and heating device 154 are moved together with the adhesive portion transfer table 118 inversely to the flow of continuous raw paper 10a, or to the prescribed position on the original upstream side. At this time, the press roller 162 presses the covering material 14 while rotating.

Then, at the front end position of the following covering material 14 transferred in the next cycle through cutting and other processes of the continuous sheet 14a of the covering materials, the adhesive portion transfer table 118 and the linear pressing and heating device 152 and flat pressing and heating device 154 forming the pressing and heating unit 150 are reengaged. At this time, the covering material 14 transferred in the previous cycle is positioned under the flat pressing and heating device 154. The continuous raw paper 10a adhered with the front end of the covering material 14 of the next cycle is transferred by a prescribed distance by the action of the continuous paper transfer unit 102, and at the same time the front covering material 14 transferred previously in the earlier cycle is pressed and heated by the flat pressing and heating device 154.

That is, when the covering material 14 adhered at its front end is positioned under the flat pressing and heating device 154, initial upstream position, which is pressed to the surface of the adhesive portion transfer table 118 by the action of cum groove formed in the disc 172 to press and heat the covering material 14.

Meanwhile, the transferring distance of the continuous raw paper 10a is restricted by a pulse sent from the encoder disposed on the continuous paper transfer unit 102, and transfer of the covering material transfer unit 120, covering material cutter 126 and pressing and heating unit 150 is controlled by a central processing unit 176. However, the continuous raw paper 10a is designed not to advance reversely in response to the backward movement of the adhesive portion transfer table 118 and the linear pressing and heating device 152 and flat pressing and heating device 154 of the pressing and heating unit 150.

The pressing and heating unit 150 thus repeats a cycle of forward movement, reflection point (downstream side), backward movement and reflection point (upstream side), and the covering material 14 is adhered suitably to the surface of the postcard material 12 constituting the continuous postcard 10 as shown in Fig. 1.

The continuous postcard 10 thus covered with the covering material 14 partly is folded suitably, and the postcard by separating the cotinuous postcard 10 is put in the post.

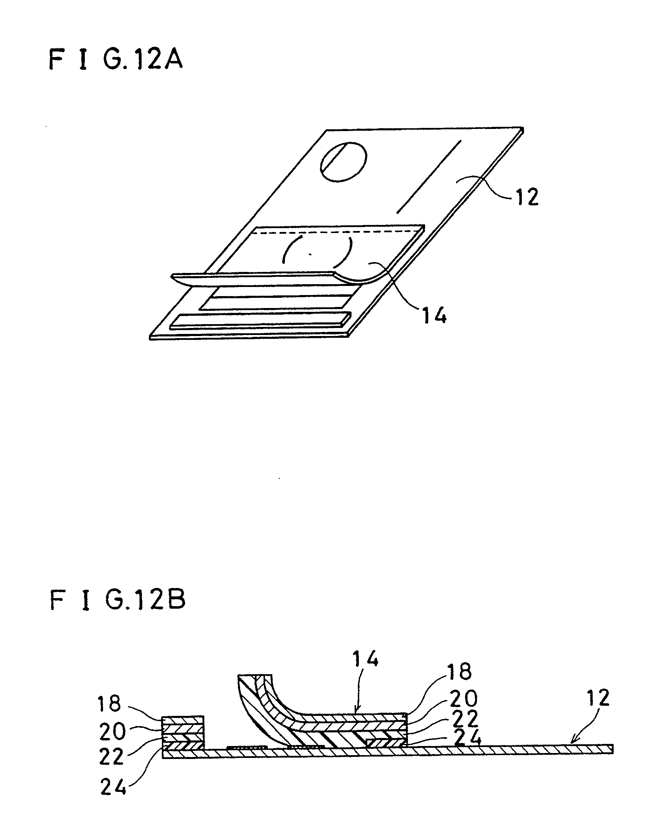

The adhered covering material 14 is adhered strongly at a portion which the second adherent resin layer 24 is formed and is adhered weakly at a portion which the second adherent resin layer 24 is not formed. Thus, as shown in Fig. 12A and Fig. 12B, the covering material 14 can be peeled off relatively easily from the postcard material 12 by cutting the base material 18, the suppression layer 20 and the first heat adherent resin layer 22.

In this case, the base material 18, the suppresion layer 22 and the first heat adherent resin layer 22 can be peeled off relatively easily at the portion which the second heat adherent resin layer 24 is formed in spots. And , the surface of the postcard material 12 can be seeing.

In addition, in the case of making this covering material 14 adhere, for example, to a confidential matter such as a residual amount deposited in a bank, a cut may be formed to the base material 18, the suppression layer 20 and the first heat adherent resin layer 22 at a boundary between a portion where the second heat adherent resin layer 24 is formed and a portion where the second heat adherent resin layer 24 is not formed, so as to be able to cut off the base material 18, the suppression layer 20 and the first heat adherent resin layer 22. In this case, the base material 18, the suppression layer 20 and the first heat adherent resin layer 22 can be peeled off from the postcard material 12 by cut at a boundary between the portion where the secnd heat adherent resin layer 24 is formed and is not formed.

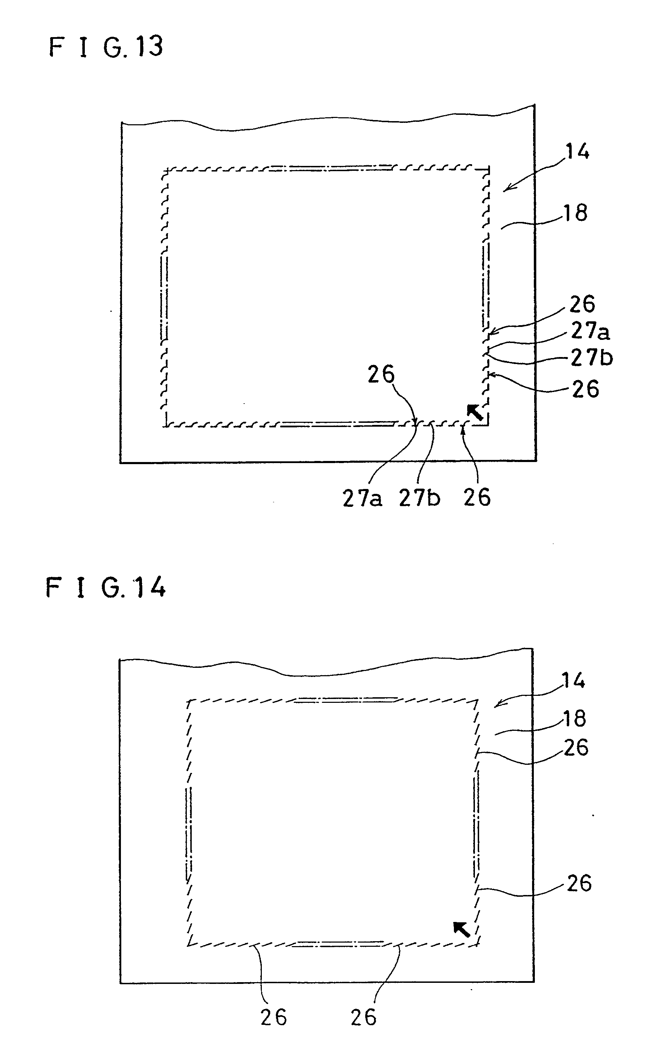

For example, a center portion of the covering material 14 may be formed so as to peel off from the postcard material 12 by forming the second heat adherent resin layer 24 along the surrounding of the first heat adherent resin layer 22. In this case, as shown in Fig. 13, when each cuts are constituted with a linear cut portion and a curvilinear cut portion respectively so as to overlap a part of one cut 26 and a part of the next cut 26 in a direction for peeling the covering material 14, the center portion of the covering material 14 can be peeled off easily. In addition, for peeling off the center portion of the covering material 14 easily, as shown in Fig 14, for example, each linear cuts 26 may be formed along edges of the base material 18 on a slant so as to overlap a part of one cut 26 and a part of the next cut 26 in a direction for peeling off the covering material 14.

However, the same covering material as the postcard material may be formed and the covering material may be formed so as to be stuck to cover the whole surface of said postcard material.

While the present invention has been particularly described and shown, it is to be understood that it is for the purpose of illustration and example and not for limitation. The spirit snd scope of the invention is therefore to be determined solely by the accompanying claims.

Industrial Applicability

When placed the surface of the first and second heat adherent resin layers on the surface of the material to be sticked and heated the first and second heat adherent resin layers, the sticking material is adhered on the surface of the material to be sticked weakly at a portion of the first heat adherent resin layer and is adhered strongly at the portion of second heat adherent resin layer. Therefore, the base material is not accidentally peeled off from the material to be sticked with a force applied to the second heat adherent resin layer. Then, the surface of the material to be sticked is covered with the base material of the sticking material including the base material having the suppressiveness or with the suppression layer of the sticking material including the suppression layer having the suppressiveness.

When peeled off the sheet base material at the portion where the second heat adherent resin layer is not formed, the sheet base material are peeled off from the material to be sticked in the sticking material including the base material having the suppressiveness, while, the sheet base material, the suppression layer, and the first heat adherent resin layer are peeled off from the material to be sticked in the sticking material including the suppression layer having the supprssiveness. Therefore, the surface of the material to be sticked can be seeing.

According to the present invention, a sticking material which is able to cover preferabley and temporarily the surface of the material to be sticked without any process on the surface of the material to be sticked, and a manufacturing method thereof are obtained.

## Claims

1. a sticking material comprising :
   a base material having a suppressiveness;
   the first heat adherent resin layer having a weak adhesion formed on a principal suface of the base material; and
   the second heat adherent resin layer having a strong adhesion formed on a part of surface of said first heat adherent resin layer.

2. A manufacturing method of a sticking material comprising:
   a step for preparing a base material having a suppressiveness;
   a step for forming a first heat adherent resin layer having a weak adhesion on a principal surface of said base material resin layer; and
   a step for forming a second heat adherent resin layer having a strong adhesion on a part of surface of said first heat adherent resin layer.

3. A sticking material comprising :

a base material;

a suppression layer having a suppressiveness on a principal surface of said base material;

the first heat adherent resin layer having a weak adhesion formed on a principal surface of the suppression layer; and the second heat adherent resin layer having a strong adhesion formed on a part of surface of said first heat adherent resin layer.

4. A manufacturing method of a sticking material comprising:

a step for preparing a base material;

a step for forming a suppression layer having a suppressivenes on a principal surface of said base material ;

a step for forming a first heat adherent resin layer having a weak adhesion on a principal surface of said suppression layer; and

a step for forming a second heat adherent resin layer having a strong adhesion on a part of surface of said first heat adherent resin layer.

F I G. 1

F I G. 2

F I G. 3A

12

14

F I G. 3B

14

18
20
22
24

24

12

# F I G. 4

# F I G. 5A

# F I G. 5B

14

F I G.6

F I G. 7A

118

116c

116

116b

116a

112    114

F I G. 7B

119a

119c

119d

119b    119e

F I G. 8

122

14a

124

## F I G. 9 A

# F I G. 9 B

# F I G. 10A

F I G.10B

# F I G.11

THE ADHESION PORTION TRANSFER TABLE — ADVANCE FORTH / ADVANCE BACK

THE TRANSFER PEDESTAL (THE LINEAR PRESSING AND HEATING DEVICE AND THE FLAT PRESSING AND HEATING DEVICE) — PRESSING / NO PRESSING

THE CUTTER — CUTTING / NO CUTTING

1 STROKE

EP 0 414 922 A1

F I G.12A

12

14

F I G.12B

14

18

18
20
22
24

20
22
24

12

## F I G.13

## F I G.14

**I. CLASSIFICATION OF SUBJECT MATTER** (if several classification symbols apply, indicate all) [6]

According to International Patent Classification (IPC) or to both National Classification and IPC

Int. Cl[5]     B42D15/02

**II. FIELDS SEARCHED**

| Minimum Documentation Searched [7] | |
|---|---|
| Classification System | Classification Symbols |
| IPC | B42D15/02 |

| Documentation Searched other than Minimum Documentation to the Extent that such Documents are Included in the Fields Searched [8] | |
|---|---|
| Jitsuyo Shinan Koho | 1962 - 1989 |
| Kokai Jitsuyo Shinan Koho | 1972 - 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, U, 62-9571 (Kazufumi Kinoshita), 21 January 1987 (21. 01. 87), (Family: none) | 1, 3 |
| A | JP, U, 63-11863 (Sayama Kako K.K.), 26 January 1988 (26. 01. 88), (Family: none) | 1, 3 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| May 25, 1990 (25. 05. 90) | June 4, 1990 (04. 06. 90) |
| International Searching Authority | Signature of Authorized Officer |
| Japanese Patent Office | |

Form PCT/ISA/210 (second sheet) (January 1985)